# EUROPÄISCHE PATENTSCHRIFT

(11) **EP 1 479 925 B1**
(45) Veröffentlichungstag und Bekanntmachung des Hinweises auf die Patenterteilung: **08.11.2006**
(21) Anmeldenummer: 04102071.0
(22) Anmeldetag: 12.05.2004
(51) Int. Cl.: F16B 21/12

(54) **Sicherungsbolzen, Verriegelungseinrichtung und Zugelement**
Locking bolt, locking device and towing element
Boulon de blocage, installation de verrouillage et élément à tirer

(30) Priorität: 21.05.2003 DE 10322933
(43) Veröffentlichungstag der Anmeldung: 24.11.2004
(73) Patentinhaber: DEERE & COMPANY, Moline, Illinois 61265-8098 (US)
(72) Erfinder: Heitlinger, Martin, 76684, Östringen-Odernheim (DE)
(74) Vertreter: Holst, Sönke

(56) Entgegenhaltungen:
- DE-A- 2 924 759
- DE-B- 1 196 904
- DE-C- 218 550
- NL-A- 285 227

## Beschreibung

Die Erfindung betrifft einen Sicherungsbolzen zum Einstecken in eine Bohrung eines Bauteils mit einem Bolzenelement, welches einen in die Bohrung einsteckbaren Schaftabschnitt und im Bereich seines dem einsteckbaren Schaftabschnitt abgewandten Endes eine radiale Querbohrung und eine im Wesentlichen axial ausgerichtete Stirnbohrung aufweist, und mit einem Federelement, das wenigstens eine Schlaufe enthält und dessen erstes Ende in die Querbohrung und dessen zweites Ende in die Stirnbohrung einsteckbar ist. die Erfindung betrifft des Weiteren eine Verriegelungseinrichtung und ein Zugelement mit einem derartigen Sicherungsbolzen.

Es sind eine Vielzahl von Sicherungsbolzen, insbesondere von Federsteckern (DIN 11 024) und Federbolzen, bekannt, die der lösbaren Sicherung von Bauteilen dienen.

Aus der US-A-2002/0069681 ist ein Sicherungsbolzen bekannt geworden, der einen zylindrischen Schaft aufweist. An einem Ende des Schaftes ist ein Kopf angeformt. Im Bereich des anderen Endes verläuft durch den Schaft eine Querbohrung, die ein als Federelement ausgebildetes Sicherungselement aufnimmt. Bei dem Federelement handelt es sich um einen Splint, dessen einer Schenkel zur Sicherung mit einem Werkzeug umgebogen wird.

Die NL-A-285227 beschreibt unter anderem eine Sicherung für Maschinenelemente mit einem Bolzen, der nahe seinem Ende eine Querbohrung und an seiner Stirnseite eine axiale Sackbohrung aufweist. Es ist ein Sperrorgan aus rundem Stahldraht vorgesehen. Ein Ende des Stahldrahtes wird von der Querbohrung und das andere Ende wird von der axialen Sackbohrung aufgenommen. Zwischen seinen beiden Enden bildet der Stahldraht eine Schlaufe aus, die seitlich vom Bolzen absteht. Diese Sicherung lässt sich von Hand nur schwer lösen, so dass sie beispielsweise für die Verwendung bei Zugelementen, die ein häufiges Lösen der Verbindung erfordern nicht als geeignet erscheint.

DE A 1 196 904 offenbart mit dem Ausführungsbeispiel gemäß den Figuren 5 und 6 einen Sicherungsbolzen zum Einstecken in eine Bohrung eines Bauteils mit einem Bolzenelement, welches einen in die Bohrung einsteckbaren Schaftabschnitt und im Bereich seines dem einsteckbaren Schaftabschnitt abgewandten Endes eine radiale Querbohrung und eine im Wesentlichen axial ausgerichtete Stirnbohrung aufweist. Der Sicherungsbolzen umfasst weiterhin ein Federelement, das wenigstens eine Schlaufe enthält und dessen erstes Ende in die Querbohrung einsteckbar ist. Die Schlaufe kreuzt wenigstens teilweise die Ausrichtung des Bolzenelements und kann durch die Federkraft des Federelements gegen das Bolzenelement gedrückt werden.

Die der Erfindung zugrunde liegende Aufgabe wird darin gesehen, einen Sicherungsbolzen der eingangs genannten Art anzugeben, durch welchen die vorgenannten Probleme überwunden werden. Insbesondere soll der Sicherungsbolzen eine zuverlässige Sicherung gewährleisten, aus wenigen einfachen, kostengünstigen Bauteilen bestehen und eine einfache Bedienung, insbesondere ein einfaches Lösen einer Verbindung ohne die Verwendung von Werkzeugen ermöglichen. Des Weiteren soll durch die Erfindung eine Verrieglungseinrichtung und ein Zugelement angegeben werden, welche die gleiche Aufgabe erfüllen.

Die Aufgabe wird erfindungsgemäß durch die Lehre eines der Patentansprüche 1, 4 oder 10 gelöst. Weitere vorteilhafte Ausgestaltungen und Weiterbildungen der Erfindung gehen aus den Unteransprüchen hervor.

Der erfindungsgemäße Sicherungsbolzen dient dem Einstecken in eine Bohrung eines Bauteils, in welcher der Sicherungsbolzen durch ein als Federelement ausgebildetes Sperrorgan festgesetzt wird, wodurch ein Bauelement zum Beispiel gegen Herausfallen gesichert wird. Der Sicherungsbolzen enthält ein Bolzenelement, dessen wenigstens einer Endbereich als ein in die Bohrung einsteckbaren Schaftabschnitt ausgebildet ist. Im Bereich des anderen Endbereichs ist in das Bolzenelement eine sich radial erstreckende Querbohrung eingelassen. Außerdem ist ausgehend von der Stirnseite dieses anderen dem einsteckbaren Schaftabschnitt abgewandten Endes in das Bolzenelement eine im Wesentlichen axial ausgerichtete Stirnbohrung, insbesondere eine Sackbohrung eingelassen, die vorzugsweise in der Bolzenachse verläuft. Des Weiteren ist ein Federelement vorgesehen, welches vorzugsweise drahtförmig ausgebildet ist und als Sicherungsfeder dient. Ein Ende des Federelements wird von der Querbohrung, das andere Ende des Federelements wird von der Stirnbohrung des Bolzenelements aufgenommen. Zwischen seinen beiden Enden bildet das Federelement wenigstens einen Bogen bzw. eine Schlaufe aus. Die Schlaufe begrenzt eine Fläche, die sich wenigstens teilweise in Richtung der Bolzenausrichtung erstreckt und in Aufsicht auf die Fläche das Bolzenelement wenigstens teilweise überdeckt. Dabei kreuzt wenigstens ein Abschnitt der Schlaufe wenigstens teilweise die Ausrichtungsachse des Bolzenelements. Das Federelement ist in montiertem Zustand derart vorgespannt, dass seine Schlaufe durch die Federkraft gegen das Bolzenelement gedrückt wird und mit wenigstens einem das Bolzenende kreuzenden Abschnitt am Bolzenelement anliegt. Die Schlaufe lässt sich von Hand unter Anwendung einer vorgebbaren Kraft vom Bolzenelement weg anheben. Bei der Verwendung des Sicherungsbolzens wird durch Anheben der Schlaufe eine Verschlussposition des Bolzenelements aufgehoben und das Bolzenelement lässt sich innerhalb der Bohrung des Bauelements axial verschieben.

Der erfindungsgemäße Sicherungsbolzen kann somit aus lediglich zwei Teilen bestehen, die sehr einfach und kostengünstig ausgebildet sind. Bei dem Bolzenelement handelt es sich vorzugsweise um ein durchgängig zylindrisches Bauteil, dessen Enden gegebenenfalls jeweils mit einer Fase versehen sind. Grundsätzlich kommen jedoch auch andere Bolzenausbildungen und andere Bolzenquerschnitte in Betracht. Es ist nicht erforderlich, dass durch Schmieden oder andere Herstellungsverfahren eine Kopfform am Bolzenelement ausgebildet wird, wie es bei bekannten Klappsteckern üblich ist.

Das Federelement kann aus Federstahl hergestellt werden und eine einfache Form aufweisen. Die Schlaufe des Federelements wird in jeder möglichen Betriebslage in die Richtung des Bolzenelements gedrückt. Das Federelement nimmt daher immer eine feste Lage ein und führt gegenüber dem Bolzenelement keine ungewollten Relativbewegungen aus, was zu Klappergeräuschen führen könnte. Der Sicherungsbolzen ist immer in seine geschlossene Stellung vorgespannt. Es ist daher nicht erforderlich, dass der Sicherungsbolzen, wie bei üblichen Klappsteckern, die sich sowohl in offener als auch in geschlossener Stellung befinden können, nach dem Einbringen in die Sicherungslage bewusst geschlossen wird.

Der Durchmesser des Bolzenelements kann unabhängig vom Durchmesser des als Sicherungsfeder ausgebildeten Federelements gewählt werden. Das Bolzenelement und das Federelement können im Gegensatz zu üblichen Federsteckern aus unterschiedlichen Materialien bestehen, die den jeweiligen Anforderung optimal anpassbar sind. Eine Wärmebehandlung des Bolzens ist nicht in jedem Anwendungsfall erforderlich.

Durch die Einspannung der Enden des Federelements in zwei zueinander senkrecht ausgerichtete Bohrungen (Querbohrung und Stirnbohrung) ist das Federelement unverlierbar mit dem Bolzenelement verbunden und lässt sich nur durch relativ große Kraftanstrengung lösen.

Der erfindungsgemäße Sicherungsbolzen kann in vorteilhafter Weise in vielen Anwendungsfällen einen üblichen Federstecker oder Klappstecker ersetzen. Neben den Vorteilen bisher üblicher Federstecker und Klappstecker bietet der erfindungsgemäße Sicherungsbolzen in einer Vielzahl von Anwendungsfällen erhebliche weitere Vorteile.

Die Sicherungsfeder kann grundsätzlich eine universelle Form aufweisen. Eine bevorzugte Ausgestaltung der Erfindung sieht jedoch vor, dass das Federelement im Wesentlichen als G-förmiger Drahtbügel ausgebildet ist. Dabei bildet der Bauch des G eine Schlaufe, die, wie bereits erwähnt wurde, am Schaft des Bolzenelements anliegt. Der mittlere horizontal ausgerichtete Endschenkel des G bildet das erste Ende des Federelements, welches in die Querbohrung des Bolzenelements eingesteckt ist. Der obere vertikal nach unten ausgerichtete Endschenkel des G bildet das zweite Ende des Federelements, welches in die axiale Stirnbohrung des Bolzenelements eingesteckt ist. Die beiden Enden des Federelements sind vorzugsweise gerade ausgebildet, so dass sie sich mühelos in enge Quer- oder Stirnbohrungen einstecken lassen. In dem Bereich, in welchem die Schlaufe am Schaft des Bolzenelements anliegt, kann die Schlaufe verbreitert ausgebildet sein, wodurch sie seitliche Vorsprünge bilden, die für die Hand gut zugänglich sind und sich gut von Hand betätigen lassen.

Die erfindungsgemäße Verriegelungseinrichtung enthält ein Bauteil mit einer Bohrung und einen in der Bohrung axial verschiebbaren Sicherungsbolzen. Das freie Schaftende des Sicherungsbolzens ragt im verriegelten Zustand aus der Bohrung bzw. einem Teilabschnitt der Bohrung heraus. Beispielsweise kann hierdurch der Sicherungsbolzen ein zu verriegelndes Bauteil in einer gewünschten Lage zurückhalten. Bei dem Sicherungsbolzen handelt es sich um einen bereits beschriebenen erfindungsgemäßen Sicherungsbolzen.

Vorzugsweise weist das Bauteil der Verriegelungseinrichtung eine Frontseite auf, aus der die Bohrung austritt und die im Wesentlichen senkrecht zur Bohrungsachse ausgerichtet ist. Im verriegelten Zustand des Sicherungsbolzens greift ein Bereich der Schlaufe des Federelements hinter die Frontseite und verhindert so ein axiales Herausziehen des Bolzenelements. Da das Federelement durch seine Vorspannung in Richtung des Sicherungsbolzenschaftes gedrückt wird, gleitet seine Schlaufe automatisch hinter die Frontseite, sobald dies durch Verschieben des Bolzenelements möglich wird. Es bedarf somit keiner weiteren Mittel, um das Federelement und mit ihm das Bolzenelement in seiner verriegelten Stellung zu sichern.

Besonders vorteilhaft ist es, das Bauteil stufenförmig auszubilden, so dass sich wenigstens eine zur Frontseite parallele Stirnfläche ergibt hinter die ein Bereich der Schlaufe des Federelements greift, sofern der Bolzen eine entriegelte Lage einnimmt. Wenn die Schlaufe des Federelements hinter der Stirnfläche anliegt, befindet sich der Sicherungsbolzen in seiner entriegelten Stellung. Vorteilhaft bei dieser Ausbildung ist es, dass der Verriegelungsbolzen auch in dieser entriegelten Stellung unverlierbar am Bauteil festgelegt ist.

Vorzugsweise ist der axiale Abstand zwischen der Frontseite des Bauteils und dessen Stirnfläche gleich groß oder größer als die Länge des im verriegelten Zustand aus der Bohrung ragenden Abschnitts des Bolzenelementschaftes. Dies hat zur Folge, dass das freie Ende des Bolzenelementschaftes im entriegelten Zustand ganz in der Bohrung verschwindet und nicht über die Stirnseite des Bauteils vorsteht. Damit ergibt sich eine zuverlässige Entriegelung.

Es ist auch von Vorteil, wenn das Bauteil eine schräge Rampe aufweist, deren Abstand zur Bohrungsachse ausgehend von der Einsteckseite des Bolzenelements bis zur Frontseite bzw. bis zu der Stirnseite des Bauteils stetig ansteigt. Dies erleichtert eine erste Montage des Sicherungsbolzens am Bauteil, bei der das Bolzenelement in die Bohrung eingeführt und das Federelement etwas vom Bolzenschaft abgehoben wird, um auf die Rampe aufgelegt zu werden. Wird das Bolzenelement nun weiter in die Bohrung geschoben, so gleitet die Schlaufe des Federelements auf der Rampe entlang und schnappt hinter die Stirnseite bzw. die Frontseite, sobald es die entsprechende Lage erreicht.

Die Verriegelungseinrichtung kann beispielsweise zur Sicherung eines Anhängebolzens in einem Zugpendel oder einem Zugmaul eines landwirtschaftlichen oder industriellen Fahrzeugs, beispielsweise eines Schleppers verwendet werden. Dabei ist zum Beispiel auf dem eigentlichen Zugpendel ein Oberteil aufgeschraubt oder auf andere Weise befestigt. Das Ende des Zugpendels kann als eine erste Lasche und das Oberteil kann als eine zweite Lasche angesehen werden, zwischen denen ein Zwischenraum zur Aufnahme einer Zugöse ausgebildet ist. Durch das Zugpendel und das Oberteil verlaufen miteinander fluchtende senkrechte Aufnahmebohrungen, die einen Anhängebolzen aufnehmen. Um den Anhängebolzen beim Fahren vor Verlust zu sichern, wird auf das Oberteil in einem geeigneten Abstand zur Aufnahmebohrung ein abgesetztes Gehäuseteil befestigt, beispielsweise angeformt, angeschweißt oder verschraubt. Das Gehäuseteil enthält eine im Wesentlichen senkrecht zur Achse des Anhängebolzens ausgerichtete, im Wesentlichen waagerechte Bohrung, die den Sicherungsbolzen aufnimmt.

Der Sicherungsbolzen lässt sich in der Bohrung verschieben, so dass sein Schaftabschnitt in einer ersten Stellung aus der Bohrung oder einem Teilbereich der Bohrung herausragt und beispielsweise über die Außenkontur des Gehäuseteils vorsteht. Der Schaftabschnitt ragt dabei in die Bewegungsbahn des Anhängebolzens hinein, indem er sich beispielsweise knapp oberhalb der oberen Stirnseite des Anhängebolzens befindet, oder in eine Querbohrung des Anhängebolzens eingreift. Dadurch verhindert der Sicherungsbolzen, dass sich der Anhängebolzen aus seinen Aufnahmebohrungen entfernt. Nach dem Lösen des Federelements lässt sich der Sicherungsbolzen aus dieser ersten Stellung bis zu einem Anschlag zurückziehen. In dieser zweiten Stellung tritt er nicht, oder nicht wesentlich aus der Bohrung bzw. einem Teilbereich der Bohrung heraus, so dass der Formschluss mit dem Anhängebolzen aufgehoben wird. In seiner zweiten Stellung beeinflusst der Sicherungsbolzen den Anhängebolzen nicht, so dass letzterer aus seinen Aufnahmebohrungen ganz oder teilweise herausgezogen werden kann, wodurch beispielsweise das Einführen oder Entfernen einer durch den Aufnahmebolzen zu sichernden Zugöse möglich ist. Beim Verschieben des Sicherungsbolzens aus seiner zweiten, unverriegelten Stellung in seine erste, verriegelte Stellung rastet das Federelement selbstständig in seine Verschlussposition ein.

Eine bevorzugte Weiterbildung der Erfindung sieht vor, dass das Bauteil eine quer zur Bohrung ausgerichtete Durchgangsbohrung aufweist, in die ein zu sichernder Anhängebolzen eingesteckt werden kann. Der Anhängebolzen weist vorzugsweise eine Querbohrung auf, durch die sich der Sicherungsbolzen schieben lässt, so dass der Anhängebolzen gegen axiales Verschieben am Bauteil gesichert ist.

Der Sicherungsbolzen kann auch zum Sichern eines anders ausgebildeten Absteckbolzens verwendet werden. Es kann sich beispielsweise um einen Absteckbolzen handeln, welcher der Anlenkung eines Zugpendels am Fahrzeugrumpf (z. B. Differentialgehäuse) dient. Das Trägerteil des Zugpendels kann hierfür eine entsprechende Stufenform aufweisen. Es sind eine Vielzahl weiterer Anwendungsgebiete für den erfindungsgemäßen Sicherungsbolzen und die erfindungsgemäße Verriegelungseinrichtung gegeben.

Ein erfindungsgemäßes Zugelement, insbesondere ein Zugpendel oder ein Zugmaul, enthält eine obere Lasche und eine untere Lasche, zwischen denen ein Zwischenraum zur Aufnahme einer Zugöse ausgebildet ist. Durch die obere und die untere Lasche verläuft je eine Aufnahmebohrung, die vertikal ausgerichtet sein können. Die Aufnahmebohrungen fluchten miteinander. Sie dienen der Aufnahme eines Anhängebolzens. Hierbei kommt eine erfindungsgemäße Verriegelungseinrichtung mit einem erfindungsgemäßen Sicherungsbolzen zum Einsatz. Die Verrieglungseinrichtung kann auf der oberen Lasche angeordnet sein. Im verriegelten Zustand greift der aus der Bohrung ragende Schaftabschnitt des Bolzenelements in die Bewegungsbahn des Anhängebolzens ein und hindert diesen an einer axialen Verschiebung und gegebenenfalls an einer Verdrehung. Eine entsprechende Ausbildung kann auch zur Befestigung eines Zugpendels am Fahrzeugrumpf mittels eines Zugpendelbolzens verwendet werden.

Vorzugsweise weist der Anhängebolzen einen gegenüber seinem Schaft radial erweiterten Kopf auf. Im verriegelten Zustand liegt der aus der Bohrung ragende Abschnitt des Schaftes des Bolzenelements an der stirnseitigen Außenfläche des Kopfes an. Anhand der Zeichnung, die ein Ausführungsbeispiel der Erfindung zeigt, werden nachfolgend die Erfindung sowie weitere Vorteile und vorteilhafte Weiterbildungen und Ausgestaltungen der

Erfindung näher beschrieben und erläutert.

Es zeigt:
- Fig. 1: einen erfindungsgemäßen Sicherungsbolzen mit einem Bolzenelement und einem Federelement,
- Fig. 2: ein Zugpendelende mit einer erfindungsgemäßen Verrieglungseinrichtung für den Anhängebolzen im nicht verriegelten Zustand,
- Fig. 3: ein Zugpendelende mit einer erfindungsgemäßen Verrieglungseinrichtung für den Anhängebolzen im verriegelten Zustand,
- Fig. 4: ein Zugmaul mit einer erfindungsgemäßen Verrieglungseinrichtung für den Anhängebolzen im verriegelten Zustand und
- Fig. 5: ein Zugmaul mit einer erfindungsgemäßen Verrieglungseinrichtung für den Anhängebolzen im verriegelten Zustand.

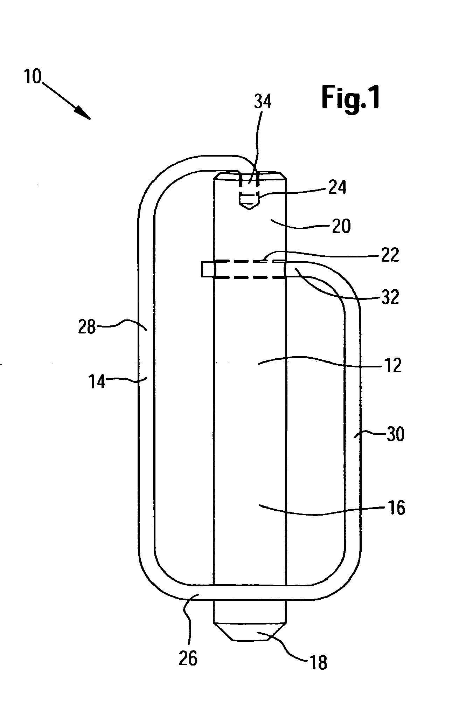

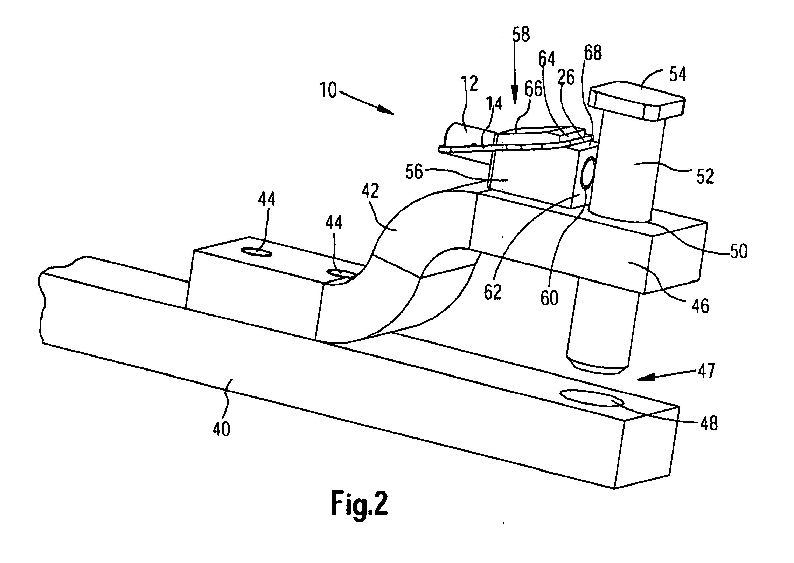

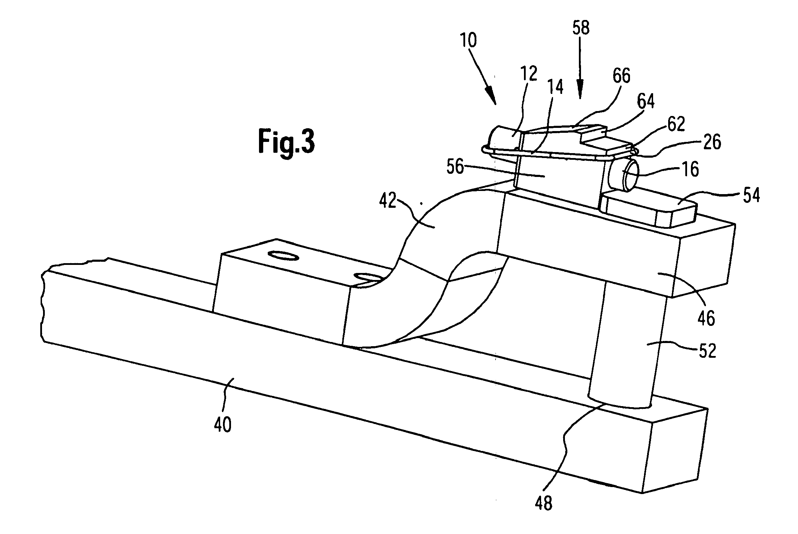

Aus Fig. 1 geht ein Sicherungsbolzen 10 hervor, der aus einem Bolzenelement 12 und einem Federelement 14 besteht. Das Bolzenelement 12 ist ein zylindrischer Vollkörper, der einen in eine Bohrung (60, Fig 2 und 3) einsteckbaren Schaftabschnitt 16 enthält, dessen Ende eine Fase 18 aufweist, die das Einstecken in die Bohrung 60 erleichtert. Im Bereich des dem Schaftabschnitt 16 entgegengesetzten Endes 20 ist in das Bolzenelement 12 eine Querbohrung 22 eingebracht. Des Weiteren befindet sich an diesem Ende 20 eine axial ausgerichtete Stirnbohrung 24, die als Sackbohrung ausgebildet ist.

Das Federelement 14 besteht aus einem Federstahldraht mit Kreisquerschnitt, der im Wesentlichen G-förmig ausgebildet ist. Der Bauch des G bildet eine Schlaufe 26, die gemeinsam mit zwei im Wesentlichen parallelen zueinander verlaufenden Schenkeln 28, 30 U-förmig gebogen ist. Der mittlere horizontal ausgerichtete erste Endschenkel 32 des G wird gebildet, indem der erste Schenkel 30 um ca. 90° nach innen abgebogen ist. Dieser erste Endschenkel 32 greift in die Querbohrung 22 des Bolzenelements 12 ein. Der obere vertikal ausgerichtete zweite Endschenkel 34 des G wird gebildet, indem der zweite Schenkel 28 zweifach um ca 90° nach innen abgebogen ist. Dieser zweite Endschenkel 34 greift in die Stirnbohrung 24 des Bolzenelements 12 ein. Das Federelement ist derart vorgespannt, dass seine Schlaufe 26 gegen den Schaftabschnitt 16 des Bolzenelements 12 gedrückt wird und sich an diesem abstützt. Indem die Bedienungsperson mit der Hand einen Druck auf die Schlaufe 26 ausübt, lässt sich diese etwas von dem Schaftabschnitt 16 abheben.

Die Figuren 2 und 3 zeigen den Endbereich eines Zugpendels, dessen nicht sichtbares anderes (linken) Ende an einem Fahrzeugrumpf schwenkbar befestigt ist. Auf dem eigentlichen Zugpendel 40 ist ein Oberteil 42 aufgeschraubt, wobei lediglich die der Verschraubung dienenden Bohrungen 44 gezeigt sind. Das Oberteil 42 weist eine in Seitenansicht S-förmige Form auf, so dass der nicht am Zugpendel 40 festgeschraubte Schenkel 46 zum Zugpendel 40 beabstandet ist und ein Zwischenraum 47 zwischen dem Zugpendel 40 und dem Oberteil 42 ausgebildet ist. Im Bereich der freien (rechten) Enden des Zugpendels 40 und des Oberteils 42 befindet sich je eine senkrecht ausgerichtete als Durchgangsbohrung ausgebildete Aufnahmebohrung 48, 50. Die beiden Aufnahmebohrungen 48, 50 fluchten miteinander und nehmen einen Anhängebolzen 52 auf. Der Anhängebolzen 52 hat an seinem oberen Ende einen flachen Kopf 54, der radial über den zylindrischen Schaft des Anhängebolzens 52 übersteht und im Wesentlichen quadratisch ausgebildet ist, wobei die Ecken des Quadrates abgerundet sind. Der Anhängebolzen 52 dient der Befestigung einer nicht dargestellten Öse, die sich beispielsweise an der Deichsel eines anhängbaren Anhängegerätes befindet.

Auf der Oberseite des Oberteils 42 ist ein Bauteil 56 einer Verriegelungsvorrichtung 58 befestigt. Die Befestigung kann beispielsweise durch Verschrauben oder Verschweißen erfolgen. Es ist jedoch auch möglich das Oberteil 42 und das Bauteil 56 aus einem Stück zu fertigen. Das Bauteil 56 ist im Wesentlichen quaderförmig ausgebildet und enthält eine Bohrung 60, die im Wesentlichen parallel zur Zugpendelausrichtung verläuft. In die Bohrung 60 ist von der dem Anhängebolzen 52 gegenüberliegenden Seite (links) aus, das Bolzenelement 12 des in Fig. 1 näher dargestellten Sicherungsbolzens 10 derart eingesteckt, dass das mit der Fase 18 versehene Schaftende des Bolzenelements 12 dem Anhängebolzen 53 zugewandt ist.

An seinem dem Anhängebolzen 52 zugewandten Ende weist das Bauteil 56 eine im Wesentlichen senkrecht ausgerichtete Frontseite 62 auf, aus der die Bohrung 60 austritt. Der obere Bereich des Bauteils 56 ist stufenförmig ausgebildet, wobei sich eine zur Frontseite 62 parallele und in die gleiche Richtung weisende Stirnseite 64 ergibt. Die Oberseite des Bauteils 56 weist eine schräge Rampe 66 auf, deren Abstand zur Achse der Bohrung 60 ausgehend von der Einsteckseite des Bolzenelements 12 bis zur Stirnfläche stetig ansteigt.

Zur Befestigung der Anhängeöse einer Deichsel an dem Zugpendel 10 wird folgendermaßen verfahren:

Zunächst wird das mit der Fase 18 versehene Schaftende des Bolzenelements 12 in die Bohrung 60 des Bauteils 56 eingeführt. Dann wird die Schlaufe 26 des Federelements 14 von der Bedienungsperson angehoben und auf die Rampe 66 des Bauteils 56 aufgelegt. Sodann wird das Bolzenelement 12 weiter in die Bohrung 60 eingeschoben. Dabei gleitet die Schlaufe 26 des Federelements 14 auf der Rampe 66 bis die Schlaufe 26 die Stirnseite 64 erreicht und in Richtung Bolzenelement 12 schnappt, wie in Fig. 2 dargestellt. Jetzt lässt sich das Bolzenelement 12 nicht mehr zurückziehen, ohne dass die Schlaufe 26 angehoben wird, was wegen der Höhe der Rampe 66 einen nicht unerheblichen Kraftaufwand erfordert. Damit ist der Sicherungsbolzen 10 unverlierbar am Bauteil 56 festgelegt.

Zum Einfädeln einer nicht dargestellten Anhängeöse wird der Anhängebolzen 52 angehoben und aus der Aufnahmebohrung 48 gezogen, so dass die Anhängeöse in den Zwischenraum 47 eingeführt werden kann. Dabei befindet sich der Sicherungsbolzen 10 in seiner in Fig. 2 dargestellten entriegelten Position, in der das freie Ende des Schaftabschnitts 16 nicht aus dem Bauteil herausragt und keinen Einfluss auf den Anhängebolzen 52 hat. Wenn die Ausnehmung der Anhängeöse mit den Aufnahmebohrungen 48, 50 fluchtet wird der Anhängebolzen 52 nach unten bewegt und durch die Anhängeöse in die Aufnahmebohrung 48 eingesteckt. Der Kopf 54 des Anhängebolzens 52 liegt dann auf der Oberseite des Schenkels 46 des Oberteils 42 auf. Damit sich die Anhängeöse nicht ungewollt vom Zugpendel lösen kann, wird der Anhängebolzen 52 in dieser Lage verriegelt. Zu diesem Zweck braucht der Sicherungsbolzen 10 lediglich in Richtung des Anhängebolzens 52 verschoben zu werden, bis die Schlaufe 26 des Federelements 14 wie in Fig. 3 dargestellt hinter die Frontseite 62 des Bauteils 56 schnappt. Das freie Ende des Schaftabschnitts 16 gleitet dabei über die obere Fläche des Kopfes 54 des Anhängebolzens 52 und verriegelt den Anhängebolzen 52 in dieser Position.

Wegen der Vorspannung des Federelementes 14 verharrt dieses in seiner in Fig. 3 gezeigten Lage. Um den Anhängebolzen 52 zu entriegeln, muss die Bedienungsperson mit einer gewissen Kraftanstrengung gegen die Federkraft die Schlaufe 26 des Federelementes 14 anheben und auf die zwischen der Frontseite 62 und der Stirnseite 64 ausgebildete Fläche 68 des Bauteils 56 auflegen. Nun lässt sich der Sicherungsbolzen 10 zurückziehen, bis die Schlaufe 26 des Federelements 14 die Stirnseite 64 erreicht und das freie Ende des Schaftabschnitts 16 in die Bohrung 60 eingezogen ist und nicht mehr in die Bewegungsbahn des Kopfes 54 des Anhängebolzens 52 eingreift. Der Anhängebolzen 52 lässt sich jetzt nach oben herausziehen, wodurch die Anhängeöse freigegeben wird.

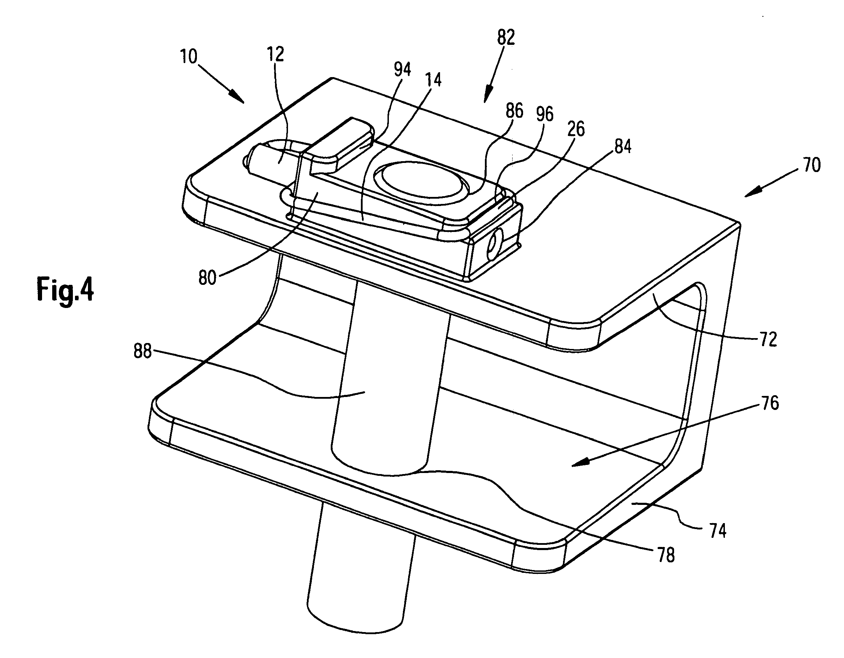

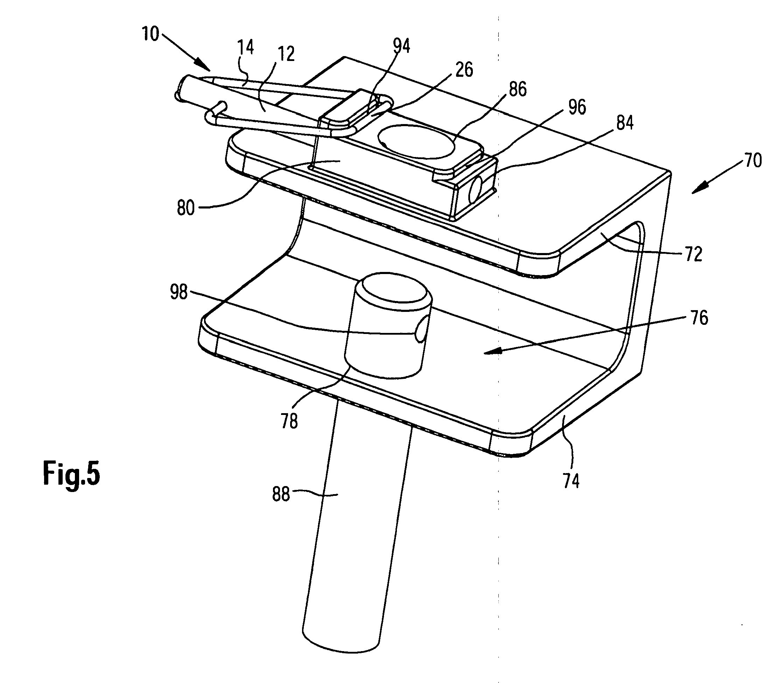

Die Figuren 4 und 5 zeigen ein Zugmaul 70, welches mit seiner abgewandten, nicht sichtbaren Seitenfläche an einem Fahrzeugrumpf, beispielsweise am Differentialgehäuse eines Ackerschleppers, befestigt sein kann. Das Zugmaul 70 enthält eine obere Lasche 72 und eine untere Lasche 74 zwischen denen ein Zwischenraum 76 ausgebildet ist. durch die Laschen 72, 74 erstreckt sich je eine Durchgangsbohrung 78, welche miteinander fluchten.

Auf der Oberseite der oberen Lasche 72 ist ein Bauteil 80 einer Verriegelungseinrichtung 82 befestigt, welches im Wesentlichen quaderförmig ausgebildet ist und das Ähnlichkeiten mit dem in den Figuren 2 und 3 dargestellten Bauteil 56 aufweist. Das Bauteil 80 enthält eine Bohrung 84, die der Aufnahme des in Fig. 1 näher dargestellten Sicherungsbolzens 10 dient. Des Weiteren erstreckt sich durch das Bauteil 80 eine im Wesentlichen senkrechte Durchgangsbohrung 86, die mit den Durchgangsbohrungen 78 der oberen und der unteren Lasche 72, 74 fluchtet. Die Durchgangsbohrungen 78, 86 nehmen einen Anhängebolzen 88 auf. Wie aus Fig. 5 ersichtlich, enthält der Anhängebolzen 88 eine Querbohrung 90, durch die sich im verriegelten Zustand, wie in Fig. 4 gezeigt, das Schaftende des Bolzenelements 12 erstreckt, so dass der Anhängebolzen 88 gegen axiales Verschieben sowie gegen Verdrehen gesichert ist.

Das Bauteil 80 ist auf seiner Oberseite stufenförmig ausgebildet und weist zwei zueinander parallele und in die gleiche Richtung weisende Stirnseiten 94, 96 auf, hinter denen die Schlaufe 26 des Federelements 14 verrasten kann. Wenn der Sicherungsbolzen 10 weit aus der Bohrung 84 des Bauteils 80 herausgezogen ist, liegt die Schlaufe 26 an der ersten Stirnseite 94 an. In dieser Stellung ragt das frei Schaftende des Bolzenelements 12 nicht in die Durchgangsbohrung 86 hinein, so das sich der Anhängebolzen 88 innerhalb der Durchgangsbohrungen 78, 86 frei bewegen lässt (Fig. 5). Wenn hingegen der Sicherungsbolzen 10 in die Bohrung 84 hineingeschoben, so dass das Bolzenelement 12 in die Durchgangsbohrung 86 hineinragt, verriegelt die Schlaufe 26 des Federelements 14 hinter der zweiten Stirnseite 96. Erstreckt sich in dieser Lage das Bolzenelement 12 auch durch die Querbohrung 90 im Anhängebolzen 88, so ist dieser am Zugmaul festgelegt (Fig. 4).

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Sicherungsbolzen zum Einstecken in eine Bohrung (60) eines Bauteils (56) mit einem Bolzenelement (12), welches einen in die Bohrung (60) einsteckbaren Schaftabschnitt (16) und im Bereich seines dem einsteckbaren Schaftabschnitt (16) abgewandten Endes (20) eine radiale Querbohrung (22) und eine im Wesentlichen axial ausgerichtete Stirnbohrung (24) aufweist, und mit einem Federelement (14), das wenigstens eine Schlaufe (26) enthält und dessen erstes Ende (32) in die Querbohrung (22) und dessen zweites Ende (34) in die Stirnbohrung (24) einsteckbar ist, wobei die Schlaufe (26) wenigstens teilweise die Ausrichtung des Bolzenelements (12) kreuzt und durch die Federkraft des Federelements (14) gegen das Bolzenelement (12) gedrückt wird, zum durch das Einstecken der zwei Enden (20, 32) der Schlaufe (26) in die Stirnbohrung (24) und in die Querbohrung (22) das Federelement (14) unverlierbar mit dem Bolzenelement (12) zu verbinden.

2. Sicherungsbolzen nach Anspruch 1, **dadurch gekennzeichnet, dass** das Bolzenelement (12) ein zylindrisches Bauteil ist.

3. Sicherungsbolzen nach Anspruch 1 oder 2, **dadurch gekennzeichnet, dass** das Federelement (14) im Wesentlichen G-förmig ausgebildet ist, wobei der Bauch des G die Schlaufe (26) bildet, der mittlere horizontal ausgerichtete Endschenkel (32) des G das erste Ende bildet und der obere vertikal ausgerichtete Endschenkel (34) des G das zweite Ende bildet.

4. Verriegelungseinrichtung mit einem eine Bohrung (60, 84) enthaltenden Bauteil (56, 80) und mit einem in der Bohrung (60, 84) axial verschiebbaren Sicherungsbolzen (10), dessen freies Schaftende im verriegelten Zustand aus der Bohrung (60, 84) herausragt, wobei der Sicherungsbolzen (10) nach einem der Ansprüche 1 bis 3 ausgebildet ist.

5. Verriegelungseinrichtung nach Anspruch 4, **dadurch gekennzeichnet, dass** das Bauteil (56, 80) eine Frontseite (62) aufweist, aus der die Bohrung (60, 84) austritt, und dass im verriegelten Zustand des Sicherungsbolzens (10) ein Bereich der Schlaufe (26) des Federelements (14) hinter die Frontseite (62) oder eine Stirnseite (96) des Bauteils (56, 80) greift und so ein Herausziehen des Bolzenelements (12) verhindert.

6. Verriegelungseinrichtung nach Anspruch 4 oder 5, **dadurch gekennzeichnet, dass** das Bauteil (56, 80) stufenförmig ausgebildet ist, so dass wenigstens eine zur Frontseite (62) parallele Stirnfläche (64, 94, 96) ausgebildet ist, hinter die ein Bereich der Schlaufe (26) des Federelements (14) greift, sofern der Sicherungsbolzen (10) eine entriegelte und gegebenenfalls eine verriegelte Lage einnimmt.

7. Verriegelungseinrichtung nach Anspruch 6, **dadurch gekennzeichnet, dass** der axiale Abstand zwischen der Frontseite (62) bzw. einer Stirnfläche (96) einerseits und einer anderen Stirnfläche (64, 94) des Bauteils (56) andererseits gleich groß oder größer ist als die Länge des im verriegelten Zustand aus der Bohrung (60) ragenden Abschnitts des Bolzenelementschaftes (12).

8. Verriegelungseinrichtung nach einem der Ansprüche 4 bis 7, **dadurch gekennzeichnet, dass** das Bauteil (56) eine schräge Rampe (66) aufweist, deren Abstand zur Bohrungsachse ausgehend von der Einsteckseite des Bolzenelements (12) bis zur Frontseite (62) bzw. bis zur Stirnseite (64) des Bauteils (56) stetig ansteigt.

9. Verriegelungseinrichtung nach einem der Ansprüche 4 bis 8, **dadurch gekennzeichnet, dass** das Bauteil (80) eine quer zur Bohrung (84) ausgerichtete Durchgangsbohrung (86) aufweist.

10. Zugelement mit einer oberen Lasche (46, 72) und einer unteren Lasche (40, 74), zwischen denen ein Zwischenraum (47, 76) zur Aufnahme einer Zugöse ausgebildet ist, bei dem durch die obere und untere Lasche (40, 46, 72, 74) je eine Aufnahmebohrung (48, 50, 78) verläuft, die der Aufnahme eines Anhängebolzens (52, 88) dient, **gekennzeichnet durch** eine Verriegelungseinrichtung nach einem der Ansprüche 4 bis 9, die auf der oberen Lasche (46, 72) angeordnet ist, derart, dass im verriegelten Zustand der aus der Bohrung (60, 84) ragende Schaftabschnitt (16) des Bolzenelements (12) in die Bewegungsbahn des Anhängebolzens (52, 88) eingreift und diesen an einer axialen Verschiebung hindert.

11. Zugelement nach Anspruch 10, **dadurch gekennzeichnet, dass** der Anhängebolzen (52) einen gegenüber seinem Schaft radial erweiterten Kopf (54) aufweist und das im verriegelten Zustand der aus der Bohrung (60) ragende Abschnitt des Schaftes des Bolzenelements (12) auf der stirnseitigen Außenfläche des Kopfes (54) anliegt.

12. Zugelement nach Anspruch 10, **dadurch gekennzeichnet, dass** der Anhängebolzen (88) eine Querbohrung (90) aufweist, die mit der Bohrung (84) des Bauteils (80) korrespondiert und durch die sich in verriegeltem Zustand das freie Schaftende des Sicherungsbolzens (10) erstreckt.

## Claims

1. Locking bolt for inserting into a bore (60) in a component (56) and comprising a bolt element (12), which has a shank portion (16) which may be inserted into the bore (60) and, in the region of its end (20) remote from the insertable shank portion (16), a radial transverse bore (22) and a substantially axially aligned end-face bore (24), said bolt further comprising a spring element (14) which contains at least one loop (26) and the first end (32) of which may be inserted into the transverse bore (22) and the second end (34) of which may be inserted into the end-face bore (24), the loop (26) crossing at least partially the alignment of the bolt element (12) and being pressed by the spring force of the spring element (14) against the bolt element (12), in order to connect the spring element (14) permanently to the bolt element (12) by inserting the two ends (20, 32) of the loop (26) into the end-face bore (24) and into the transverse bore (22).

2. Locking bolt according to claim 1, **characterised in that** the bolt element (12) is a cylindrical component.

3. Locking bolt according to claim 1 or 2, **characterised in that** the spring element (14) is substantially G-shaped, the bulge of the G forming the loop (26), the central, horizontally aligned end member (32) of the G forming the first end and the upper, vertically aligned end member (34) of the G forming the second end.

4. Locking assembly comprising a component (56, 80), which contains a bore (60, 84), and a locking bolt (10) which is axially displaceable in the bore (60, 84) and the free shank end of which protrudes out of the bore (60, 84) in the locked state, the locking bolt (10) being designed according to one of claims 1 to 3.

5. Locking assembly according to claim 5, **characterised in that** the component (56, 80) has a front face (62), from which the bore (60, 84) emerges, and **in that**, in the locked state of the locking bolt (10), a region of the loop (26) of the spring element (14) engages behind the front face (62) or an end face (96) of the component (56, 80) and thus prevents the withdrawal of the bolt element (12).

6. Locking assembly according to claim 4 or 5, **characterised in that** the component (56, 80) is designed step-shaped such that at least one end face (64, 94, 96) is formed which is parallel to the front face (62) and behind which a region of the loop (26) of the spring element (14) engages, insofar as the locking bolt (10) assumes an unlocked position and possibly a locked position.

7. Locking assembly according to claim 6, **characterised in that** the axial distance between the front face (62) or an end face (96) on the one hand and another end face (64, 94) of the component (56) on the other hand is as large as or larger than the length of the portion of the shank of the bolt element (12) which protrudes from the bore (60) in the locked state.

8. Locking assembly according to one of claims 4 to 7, **characterised in that** the component (56) has an inclined ramp (66), the distance of which from the bore axis increases continuously from the insertion side of the bolt element (12) to the front face (62) or end face (64) of the component (56).

9. Locking assembly according to one of claims 4 to 8, **characterised in that** the component (80) has a through bore (86) aligned transversely with respect to bore (84).

10. Towing member having an upper leg (46, 72) and a lower leg (40, 74) between which a space (47, 76) is formed for receiving a trailer eye, in which towing member a bore (48, 50, 78) for receiving a towing bolt (52, 88) extends through the upper and lower legs (40, 46, 72, 74), **characterised by** a locking assembly according to one of claims 4 to 9 which is arranged on the upper leg (46, 72) in such a way that, in the locked state, the shank portion (16) of the bolt element (12) which protrudes from the bore (60, 84) engages in the movement path of the towing bolt (52, 88) and prevents the latter from axial displacement.

11. Towing member according to claim 10, **characterised in that** the towing bolt (52) has a head (54) which is radially widened by comparison with its shank and the portion of the shank of the bolt element (12) which protrudes from the bore (60) in the locked state abuts against the exterior end face of the head (54).

12. Towing member according to claim 10, **characterised in that** the towing bolt (88) has a transverse bore (90) which corresponds to the bore (84) in the component (80) and through which the free shank end of the locking bolt (10) extends in the locked state.

## Revendications

1. Boulon de blocage destiné à être enfiché dans une forure (60) d'un élément (56), comprenant un élément de boulon (12), qui comporte une partie de tige (16) destinée à être enfichée dans la forure (60) et, dans la zone de son extrémité (20) opposée à la partie de tige (16) à enficher, une forure transversale (22) radiale et une forure frontale (24) orientée sensiblement dans le sens axial, et comprenant un élément de ressort (14) qui contient au moins une boucle (26) et dont la première extrémité (32) est apte à être enfichée dans la forure transversale (22) et dont la deuxième extrémité (34) est apte à être enfichée dans la forure frontale (24), dans lequel la boucle (26) croise au moins en partie l'orientation de l'élément de boulon (12) et, sous l'effet de la force de l'élément de ressort (14) est poussée contre l'élément de boulon (12), afin que, sous l'effet de l'enfichage des deux extrémités (20, 32) de la boucle (26) dans la forure frontale (24) et dans la forure transversale (22), l'élément de ressort (14) est relié de manière imperdable à l'élément de boulon (12).

2. Boulon de blocage selon la revendication 1, **caractérisé en ce que** l'élément de boulon (12) est un élément cylindrique.

3. Boulon de blocage selon la revendication 1 ou 2, **caractérisé en ce que** l'élément de ressort (14) est réalisé sensiblement en forme de G, la courbure du G formant la boucle (26), la branche d'extrémité centrale (32), orientée horizontalement, formant la première extrémité du G et la branche d'extrémité supérieure (34), orientée verticalement, formant la deuxième extrémité du G.

4. Dispositif de verrouillage comportant un premier élément (56, 80) contenant une forure (60, 84) et comportant un boulon de blocage (10) mobile axialement dans la forure (60, 84), dont l'extrémité libre de la tige s'avance hors de la forure (60, 84) dans la position verrouillée, le boulon de blocage (10) étant réalisé selon l'une quelconque des revendications 1 à 3.

5. Dispositif de verrouillage selon la revendication 4, **caractérisé en ce que** l'élément (56, 80) comporte une face frontale (62), hors de laquelle sort la forure (60, 84), et **en ce que**, dans la position verrouillée du boulon de blocage (10), une partie de la boucle (26) de l'élément de ressort (14) s'engage derrière la face frontale (62) ou une face frontale (96) de l'élément (56, 80) et empêche ainsi que l'élément de boulon (12) puisse être retiré.

6. Dispositif de verrouillage selon la revendication 4 ou 5, **caractérisé en ce que** l'élément (56, 80) est réalisé sous forme étagée, de manière à réaliser au moins une surface frontale (64, 94, 96) parallèle à la face frontale (62) et derrière laquelle s'engage une partie de la boucle (26) de l'élément de ressort (14), pour autant que le boulon de blocage (10) soit amené dans une position déverrouillée et, le cas échéant, une position verrouillée.

7. Dispositif de verrouillage selon la revendication 6, **caractérisé en ce que** la distance axiale entre la face frontale (62) ou une surface frontale (96), d'une part, et une autre surface frontale (64, 94) de l'élément (56), d'autre part, est égale ou supérieure à la longueur de la partie de la tige de l'élément de boulon (12) s'avançant à l'état verrouillé hors de la forure (60).

8. Dispositif de verrouillage selon l'une quelconque des revendications 4 à 7, **caractérisé en ce que** l'élément (56) comporte une rampe (66), dont la distance par rapport à l'axe de la forure augmente progressivement en partant du côté d'enfichage de l'élément de boulon (12) jusqu'à la face frontale (62) ou jusqu'à la surface frontale (64) de l'élément (56).

9. Dispositif de verrouillage selon l'une quelconque des revendications 4 à 8, **caractérisé en ce que** l'élément (80) comporte une forure débouchante (86) orientée perpendiculairement à la forure (84).

10. Élément de traction comportant une patte supérieure (46, 72) et une patte inférieure (40, 74), entre lesquelles est réalisé un espace intermédiaire (47, 76) destiné à recevoir un anneau de traction, dans lequel une forure de réception (48, 50, 78) est réalisée dans la patte supérieure (46, 72) et dans la patte inférieure (40, 74), laquelle est destinée à recevoir un boulon d'accrochage (52, 88), **caractérisé par** un dispositif de verrouillage selon l'une quelconque des revendications 4 à 9, qui est situé sur la patte supérieure (46, 72), de telle sorte que, dans la position verrouillée, la partie de tige (16) de l'élément de boulon (12), s'avançant hors de la forure (60, 84), s'engage dans la trajectoire de mouvement du boulon d'accrochage (52, 88) et empêche celui-ci de se déplacer dans le sens axial.

11. Élément de traction selon la revendication 10, **caractérisé en ce que** le boulon d'accrochage (52) comporte une tête (54) élargie dans le sens radial par rapport à sa tige et **en ce que**, dans la position verrouillée, la partie de la tige de l'élément de boulon (12) s'avançant hors de la forure (60) est en appui sur la face extérieure frontale de la tête (54).

12. Élément de traction selon la revendication 10, **caractérisé en ce que** le boulon d'accrochage (88) comporte une forure transversale (90), qui coopère avec la forure (84) de l'élément (80) et à travers laquelle passe l'extrémité de tige, libre à l'état verrouillé, du boulon de blocage (10).
